# EUROPEAN PATENT APPLICATION

(11) **EP 3 163 427 A1**
(43) Date of publication of application: **03.05.2017**
(21) Application number: 14896448.9
(22) Date of filing: 17.09.2014
(51) Int. Cl.: G06F 3/0488

(54) **METHOD FOR OPERATING SOFT KEYBOARD, TERMINAL AND COMPUTER READABLE STORAGE MEDIUM**

(30) Priority: 30.06.2014 CN 201410306463
(71) Applicant: Sanechips Technology Co., Ltd., Nanshan District Shenzhen, Guangdong 518055 (CN)
(72) Inventor: ZHANG, Hua, Shenzhen Guangdong 518055 (CN)
(74) Representative: Brevalex
(86) International application number: PCT/CN2014/086715
(87) International publication number: WO 2016/000323

(57) **Abstract**

A method for operating a soft keyboard, applied to an operating system of a terminal, includes that: a soft keyboard starting instruction is obtained and executed, and a mapping relationship between key positions and key characters is generated randomly (S101); the key characters are arranged on the key positions in one-to-one correspondence according to the mapping relationship, so as to form a soft keyboard (S102); and the soft keyboard is displayed (S103). Also disclosed is a terminal.

## Description

### TECHNICAL FIELD

The disclosure relates to input methods for a terminal, and in particular to a method for operating a soft keyboard, a terminal and a computer readable storage medium.

### BACKGROUND

In recent years, with the fast development of mobile communications, users rely more and more on mobile terminals. The recent fast development of Internet finance makes users accustomed to using the mobile terminals to manage money matters. Some software with a function of managing money matters is installed in the mobile terminals of users, such as a mobile phone and a tablet computer. Thus, the security issue of inputting an account and password becomes important.

At present, for a mobile phone, when a user inputs an account and password on a login page of the software with the function of managing money matters which is installed in the mobile phone, the operating system calls a system keyboard for the user to input. However, there is a risk that the account and password are stolen by Trojans. Some application developers build an out-of-order soft keyboard in the application to ensure the security of the account and password of the user. Because the out-of-order soft keyboard and a conventional keyboard have different arrangements, the risk that the account and password are stolen by Trojans can be reduced. However, not all applications can use the out-of-order soft keyboard.

Accordingly, in the conventional art, there is a technical problem that the security of inputting information on the terminal is low.

### SUMMARY

To solve the technical problems in the conventional art, the disclosure is intended to provide a method for operating a soft keyboard, a terminal and a computer readable storage medium.

According to a first aspect, a method for operating a soft keyboard is provided, which is applied to the operating system of a terminal, and includes that: a soft keyboard starting instruction is obtained and executed, and a mapping relationship between key positions and key characters is generated randomly; the key characters are arranged on the key positions in one-to-one correspondence according to the mapping relationship, so as to form a soft keyboard; and the soft keyboard is displayed.

In the above solution, after the soft keyboard is displayed, the method further includes that: an input operation of a user on the first key position is obtained; a first key character corresponding to the first key position is determined based on the mapping relationship; and the content inputted through the input operation is identified according to the first key character.

In the above solution, the step that the soft keyboard starting instruction is obtained includes that: the soft keyboard starting instruction is generated based on the operation of the user; or, the soft keyboard starting instruction is generated based on the type of an application running in the foreground.

In the above solution, the step that the mapping relationship between the key positions and the key characters is generated randomly includes that: the key positions and the key characters are paired randomly and saved in association with each other, so as to generate the mapping relationship.

According to a second aspect, a terminal is provided, including: an obtainment unit configured to obtain the soft keyboard starting instruction, an execution unit configured to execute the soft keyboard starting instruction, and randomly generate the mapping relationship between the key positions and the key characters, an arrangement unit configured to arrange the key characters on the key positions in one-to-one correspondence according to the mapping relationship, so as to generate a soft keyboard, and a display unit configured to display the soft keyboard.

In the above solution, the obtainment unit is further configured to, after the display unit displays the soft keyboard, obtain the input operation of a user on the first key position; the terminal further includes: a determination unit configured to determine the first key character corresponding to the first key position based on the mapping relationship; and an identification unit configured to identify the content inputted through the input operation according to the first key character.

In the above solution, the obtainment unit is configured to generate the soft keyboard starting instruction based on the operation of the user or the type of the application running in the foreground.

In the above solution, the execution unit is configured to randomly pair the key positions and the key characters and save them in association with each other, so as to generate the mapping relationship.

According to a third aspect, a computer readable storage medium is provided, including a set of computer executable instructions, wherein the instructions are configured to execute the method for operating a soft keyboard according to an embodiment of the disclosure.

According to the method for operating a soft keyboard, the terminal and the computer readable storage medium provided by the embodiments of the disclosure, after obtaining and executing the soft keyboard starting instruction, the operating system of the terminal randomly generates the mapping relationship between the key positions and the key characters, and arranges the key characters on the key positions in one-to-one correspondence according to the mapping relationship, so as to form a soft keyboard. That is, the order of each of key positions on a keyboard and its corresponding key character is randomly disrupted. For example, the key character corresponding to the first key position from the left in the first line of a common keyboard should be "Q". However, after the order is disrupted, the key character corresponding to the key position may be any one of all the rest keys. Then, the out-of-order key characters are arranged to form a new soft keyboard, namely the out-of-order soft keyboard. At last, the operating system displays the soft keyboard. In this way, when the user inputs information requiring high security, like the account and password, the information is not easily stolen by Trojans. Also, because the out-of-order soft keyboard is generated by the operating system of the terminal, all of the software installed in the terminal can be called. As such, the risk that the information requiring high security of the user is stolen is reduced greatly, the technical problem that the security of inputting information on the terminal is low in the conventional art is solved effectively, the security of inputting information on the terminal is improved, the demands of the users are met, and the user experience is improved.

### BRIEF DESCRIPTION OF THE DRAWINGS

Fig. 1 is a flowchart showing a method for operating a soft keyboard according to an embodiment of the disclosure;
Fig. 2 is a schematic diagram illustrating a qwert keyboard in the conventional art;
Fig. 3 is a schematic diagram illustrating a soft keyboard according to an embodiment of the disclosure;
Fig. 4 is a flowchart showing a method for identifying the content inputted by a user according an embodiment of the disclosure; and
Fig. 5 is a structure diagram illustrating a terminal according to an embodiment of the disclosure.

### DETAILED DESCRIPTION

The technical solutions in the disclosure are clearly and completely described below in combination with the accompanying drawings.

An embodiment of the disclosure provides a method for operating a soft keyboard, which is applied to the operating system of a terminal, for example, Android, Windows, and IOS running in a smartphone, a tablet computer and other terminals.

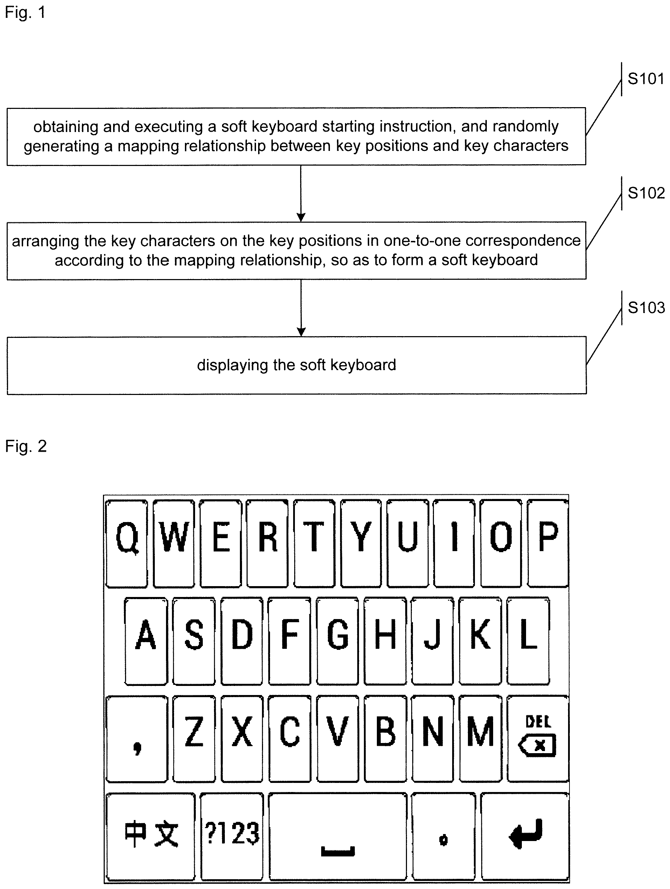

Fig. 1 is a flowchart showing a method for operating a soft keyboard according to an embodiment of the disclosure. As shown in Fig. 1, the method includes the following steps.

At Step S101, a soft keyboard starting instruction is obtained and executed, and a mapping relationship between key positions and key characters is generated randomly. That is, when a user wants to input information requiring high security, such as an account and password, the terminal can trigger its operating system automatically or manually by the user to obtain the soft keyboard starting instruction. Then, the operating system executes the soft keyboard starting instruction, randomly pairs the key positions and the key characters, and saves all of the key positions and key characters in association with each other, so as to generate the mapping relationship between the key positions and the key characters.

In practice, the mapping relationship can be stored in a form of a table. As shown in below Table 1, all of key positions and key characters on the existing soft keyboard are included. The mapping relationship can also be set as a storage unit for each of key positions in the storage space of the terminal and the ASCII code of the corresponding key character is written in the storage unit. Certainly, there are other storage modes which are not limited by the disclosure.

**Table 1**

| Key position | Key character |
|---|---|
| 1 | T |
| 2 | N |

In the specific implementation process, the process of obtaining the soft keyboard starting instruction in Step S101 includes that: the soft keyboard starting instruction is generated based on the operation of the user; or, the soft keyboard starting instruction is generated based on the type of an application running in the foreground. That is, the operating system of the terminal can generate the soft keyboard starting instruction according to the operation of the user, for example, the operation of clicking the button "Switch Input Method" by the user. Alternatively, when the user opens a login page of an application for managing money matters, the operating system generates the soft keyboard starting instruction.

Preferably, when the user clicks the button "Switch Input Method", or the operating system detects that a certain application for managing money matters is opened, a prompt interface is first displayed to ask the user whether to start the soft keyboard and switch to a safe input mode. If the user selects "Yes", the operating system generates the soft keyboard starting instruction. If the user selects "No", the common keyboard is displayed, and the flow ends.

At Step S102, the key characters are arranged on the key positions in one-to-one correspondence according to the mapping relationship, so as to form a soft keyboard.

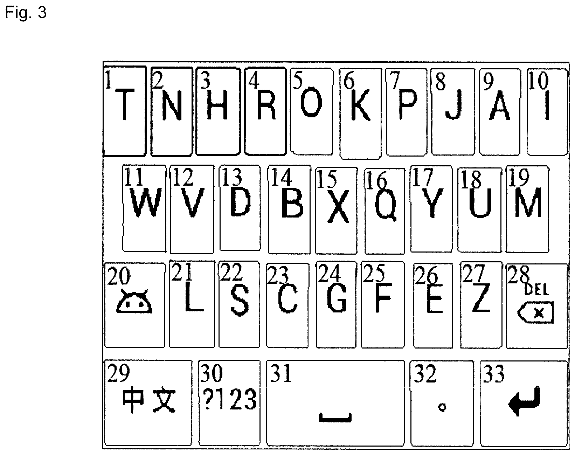

Particularly, after the mapping relationship is generated, the operating system arranges the key characters on the key positions in one-to-one correspondence according to the mapping relationship, so as to form a soft keyboard. As shown in Fig. 3 (schematic key position serial numbers are marked on the top of buttons), the soft keyboard is out of order relative to the qwert keyboard in the conventional art, which is shown in Fig. 2.

At Step S103, the soft keyboard is displayed. That is, the operating system displays the drawn soft keyboard on a display unit for the user to operate.

Now the terminal enters the safe input mode, and starts the out-of-order soft keyboard. Then, the user can input information by means of the soft keyboard.

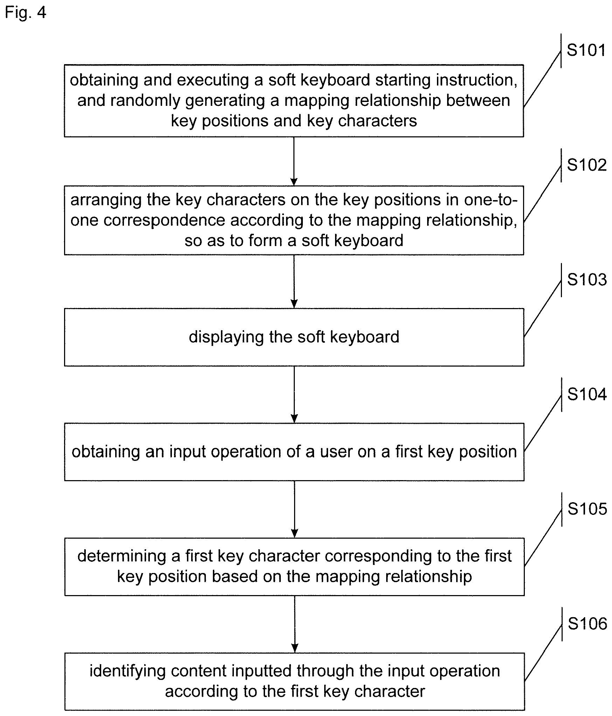

Fig. 4 is a flowchart illustrating a method for identifying the content inputted by a user according an embodiment of the disclosure. As shown in Fig. 4, after Step S103, the method further includes the following steps.

At Step S104, an input operation of a user on the first key position is obtained. That is, the user "presses" the key of the first key position to input the key character corresponding to the first key position. For example, the user "presses" the key No. 15 in the second line of the soft keyboard shown in Fig. 3.

At Step S105, the first key character corresponding to the first key position is determined based on the mapping relationship.

Particularly, for the soft keyboard shown in Fig. 3, the operating system determines the first key character corresponding to the first key position based on the mapping relationship between the key positions and the key characters. For example, the key character "X" corresponding to the key position No. 15 is determined.

At Step S106, the content inputted through the input operation is identified according to the first key character. That is, the corresponding ASCII code "01011000" is found according to the key character "X", so as to identify the content, namely the character "X", inputted by the user.

In another embodiment, for saving the storage space, the mapping relationship between the key positions and the key characters in one or more embodiments can be replaced with a relationship between the key positions and the ASCII codes. For example, the key No. 1 is enabled to correspond to the ASCII code "01010100". In this way, after the operating system obtains, through the Step S104, the input operation of the user on the first key position, such as the key No. 1, the content inputted through the input operation can be identified by finding the corresponding ACSII code according to the mapping relationship.

When the user does not use the application for managing money matters any more or inputs common information, the user can switch to the common input mode by clicking the button "Switch Input Method". When the user opens the safe input mode again, the mapping relationship between the key positions and the key characters will change again. As such, Trojans cannot accurately obtain the information inputted by the user, and the aim of ensuring the security of input information is achieved.

From the above, because the soft keyboard is generated randomly by the operating system of the terminal, all of the software installed in the terminal can call the soft keyboard. Therefore, the risk that the information requiring high security of the user is stolen is reduced greatly, the technical problem that the security of inputting information on the terminal is low in the conventional art is solved effectively, the security of inputting information on the terminal is improved, the demands of users are met, and the user experience is improved.

An embodiment of the disclosure provides a terminal, which may be a smartphone, a tablet computer, and other devices. One or more of Android, Windows, and IOS run in the terminal.

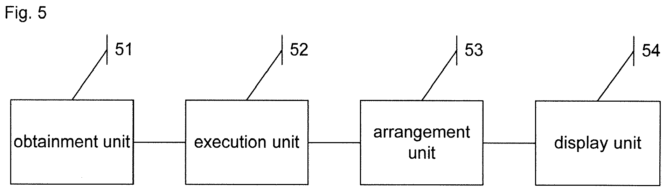

Fig. 5 is a structure diagram illustrating a terminal according to an embodiment of the disclosure. As shown in Fig. 5, the terminal includes: an obtainment unit 51 configured to obtain the soft keyboard starting instruction; an execution unit 52 configured to execute the soft keyboard starting instruction, and randomly generate the mapping relationship between the key positions and the key characters; an arrangement unit 53 configured to arrange the key characters on the key positions in one-to-one correspondence according to the mapping relationship, so as to generate a soft keyboard; and a display unit 54 configured to display the soft keyboard.

Furthermore, the obtainment unit 51 is further configured to, after the display unit 54 displays the soft keyboard, obtain the input operation of the user on the first key position; correspondingly, the terminal further includes: a determination unit configured to determine the first key character corresponding to the first key position based on the mapping relationship; and an identification unit configured to identify the content inputted through the input operation according to the first key character.

Herein, the obtainment unit 51 is configured to generate the soft keyboard starting instruction based on the operation of the user or the type of the application running in the foreground.

Herein, the execution unit 52 is configured to randomly pair the key positions and the key characters and save them in association with each other, so as to generate the mapping relationship.

The obtainment unit 51, the execution unit 52, the arrangement unit 53, the display unit 54, the determination unit and the identification unit may be set either in a processor such as CPU and ARM or on a single chip microcomputer and a system on chip, which is not limited by the disclosure.

An embodiment of the disclosure provides a computer readable storage medium, including a set of computer executable instructions, wherein the instructions are configured to execute the method for operating a soft keyboard according to the embodiments of the disclosure.

Those skilled in the art should appreciate that the embodiments of the disclosure may be provided as a method, a system or a computer program product. Accordingly, this disclosure can adopt hardware, software, or a combination thereof. Besides, the disclosure can adopt the form of a computer program product which is implemented on one or more computer available storage media including computer available program codes (including, but not limited to, a magnetic disk memory and an optical memory).

The invention is described according to the flowcharts and/or block diagrams of the method, the device (system) and the computer program product in the embodiments of the disclosure. It should be understood that each flow and/or block in the flowchart and/or block diagram, and the combination of the flow and/or block in the flowchart and/or block diagram can be implemented by the computer program instructions. These computer program instructions may be provided to the processing unit of the general-purpose computer, the special-purpose computer, the embedded processor or other programmable data processing equipment to generate a machine, so that the instructions which are executed by the processing unit of the computer or other programmable data processing equipment generate a device which is used for implementing the specified functions in one or more flows of the flowchart and/or one or more blocks of the block diagram.

These computer program instructions may also be stored in the computer-readable memory which may guide the computer or other programmable data processing equipment to work in a particular way, so that the instructions stored in the computer-readable memory generate a product including the instruction device, wherein the instruction device implements the specified functions in one or more flows of the flowchart and/or one or more blocks of the block diagram.

These computer program instructions may also be loaded on the computer or other programmable data processing equipment, so that a series of operation steps are performed on the computer or other programmable data processing equipment to generate the processing implemented by the computer, and the instructions executed on the computer or other programmable data processing equipment provide the steps for implementing the specified functions in one or more flows of the flowchart and/or one or more blocks of the block diagram.

The above is only the preferred embodiments of the disclosure and not intended to limit the scope of protection of the disclosure.

## Claims

1. A method for operating a soft keyboard, applied to an operating system of a terminal, comprising:
obtaining and executing a soft keyboard starting instruction, and randomly generating a mapping relationship between key positions and key characters;
arranging the key characters on the key positions in one-to-one correspondence according to the mapping relationship, so as to form a soft keyboard; and
displaying the soft keyboard.

2. The method according to claim 1, further comprising: after displaying the soft keyboard,
obtaining an input operation of a user on a first key position;
determining a first key character corresponding to the first key position based on the mapping relationship; and
identifying content inputted through the input operation according to the first key character.

3. The method according to claim 1 or 2, wherein obtaining the soft keyboard starting instruction comprises:
generating the soft keyboard starting instruction based on an operation of a user; or
generating the soft keyboard starting instruction based on a type of an application running in the foreground.

4. The method according to claim 1 or 2, wherein randomly generating the mapping relationship between the key positions and the key characters comprises:
randomly pairing the key positions and the key characters and saving them in association with each other, so as to generate the mapping relationship.

5. A terminal, comprising:
an obtainment unit configured to obtain a soft keyboard starting instruction;
an execution unit configured to execute the soft keyboard starting instruction, and randomly generate a mapping relationship between key positions and key characters;
an arrangement unit configured to arrange the key characters on the key positions in one-to-one correspondence according to the mapping relationship, so as to generate a soft keyboard; and
a display unit configured to display the soft keyboard.

6. The terminal according to claim 5, wherein the obtainment unit is further configured to, after the display unit displays the soft keyboard, obtain an input operation of a user on a first key position;
the terminal further comprises:
a determination unit configured to determine a first key character corresponding to the first key position based on the mapping relationship; and
an identification unit configured to identify content inputted through the input operation according to the first key character.

7. The terminal according to claim 5 or 6, wherein the obtainment unit is configured to generate the soft keyboard starting instruction based on an operation of a user or a type of an application running in the foreground.

8. The terminal according to claim 5 or 6, wherein the execution unit is configured to randomly pair the key positions and the key characters and save them in association with each other, so as to generate the mapping relationship.

9. A computer readable storage medium, comprising a set of computer executable instructions, wherein the instructions are configured to execute the method for operating a soft keyboard according to any one of claims 1 to 4.
